(19) Europäisches Patentamt / European Patent Office / Office européen des brevets

(11) **EP 3 262 871 B1**

(12) **FASCICULE DE BREVET EUROPEEN**

(45) Date de publication et mention de la délivrance du brevet:
**24.06.2020 Bulletin 2020/26**

(21) Numéro de dépôt: **16714982.2**

(22) Date de dépôt: **24.02.2016**

(51) Int Cl.:
*H04W 48/18* (2009.01)    *H04W 24/06* (2009.01)
*H04W 88/06* (2009.01)

(86) Numéro de dépôt international:
**PCT/FR2016/050434**

(87) Numéro de publication internationale:
**WO 2016/135424 (01.09.2016 Gazette 2016/35)**

(54) **SÉLECTION DE RÉSEAU D'ACCÈS POUR UN TERMINAL MULTI-ACCÈS, BASÉE SUR UN SIGNAL PHÉROMONAL**

ZUGANGSNETZAUSWAHL FÜR EIN MEHRFACHZUGRIFFSENDGERÄT AUF BASIS EINES PHEROMONSIGNALS

ACCESS NETWORK SELECTION FOR A MULTI-ACCESS TERMINAL, BASED ON A PHEROMONE SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.02.2015 FR 1551713**

(43) Date de publication de la demande:
**03.01.2018 Bulletin 2018/01**

(73) Titulaire: **Orange**
**75015 Paris (FR)**

(72) Inventeur: **MAMOUNI, Tahar**
**35140 Mezieres-Sur-Couesnon (FR)**

(56) Documents cités:
EP-A1- 2 663 129        WO-A1-2008/155444
US-A1- 2011 319 071    US-A1- 2013 073 710
US-A1- 2014 056 153    US-B1- 8 504 083

Remarques:
Le dossier contient des informations techniques présentées postérieurement au dépôt de la demande et ne figurant pas dans le présent fascicule.

## Description

### 1. Domaine de l'invention

L'invention se situe dans le domaine des terminaux multi-accès, c'est-à-dire capables de se connecter à plusieurs réseaux d'accès qui sont de technologies différentes.

### 2. Etat de la technique antérieure

Un terminal multi-accès, par exemple un smartphone ou une tablette, possède plusieurs interfaces lui permettant de se connecter simultanément à plusieurs réseaux d'accès, par exemple à la fois à un réseau WiFi et à un réseau 4G.

Afin de profiter du surcroit de bande passante rendu possible par cette utilisation simultanée de plusieurs réseaux d'accès, le terminal doit donc répartir de façon judicieuse sur chacune de ses interfaces le trafic qu'il émet ou qu'il reçoit.

Comme une session de communication reste sur le même réseau d'accès pour toute sa durée, le terminal doit donc répartir au mieux ses sessions, qui peuvent être très nombreuses et surtout en parallèle. De plus, cette répartition doit être adaptée en temps réel à l'état de chaque réseau d'accès.

Avant le début d'une nouvelle session, le terminal doit donc choisir au travers de quelle interface établir la session. Afin d'optimiser la bande passante agrégée sur toutes ses interfaces, le terminal doit faire ce choix en fonction du débit nécessaire à la session, comparé au débit restant sur chaque interface.

Ceci nécessite de mesurer en temps réel les débits respectifs des réseaux d'accès, instantanés et/ou lissés sur une ou plusieurs durées, ce qu'il n'est pas possible de faire au niveau du terminal sans solliciter des éléments de gestion dans les réseaux d'accès concernés, et sans messages de signalisation spécifiques vers les terminaux, qui peuvent se compter par dizaines de milliers à être simultanément connectés à un réseau d'accès donné. D'autre part, les mécanismes d'estimation de bande passante sont généralement peu fiables, et non adaptés aux variations intempestives des conditions radio.

Le document EP 2 663 129 A1 de l'art antérieur décrit par exemple la sélection d'un réseau radio de communication entre deux terminaux. Un signal test est envoyé à travers chacun desdits réseaux, des réponses aux signaux tests envoyés permettent de déterminer au moins une caractéristique de chacun desdits réseaux, la sélection du réseau radio de communication se basant sur les caractéristiques obtenues.

Le document US 2014/0056153 A1 décrit également une sélection d'un réseau radio de communication parmi une pluralité de réseaux. Dans ce document, un terminal transmet à un serveur intermédiaire, à travers chacun des réseaux et à intervalles réguliers, des "test data" dont la transmission permet une évaluation et un classement desdits réseaux.

Un des buts de l'invention est de remédier à ces inconvénients de l'état de la technique.

### 3. Exposé de l'invention

L'invention vient améliorer la situation à l'aide d'un procédé de mise à jour conforme à la revendication 1.

Grâce à l'invention, le premier terminal, par exemple un terminal multi-accès, c'est-à-dire un terminal disposant de plusieurs interfaces lui permettant de se connecter au choix ou simultanément à plusieurs réseaux d'accès différents, peut à tout instant sélectionner le réseau d'accès ayant le débit le plus adapté à ses besoins en réception, c'est-à-dire dans le sens descendant. Il lui suffit pour cela de consulter les tables et de sélectionner, par exemple, le réseau d'accès dont la table contient le plus de lignes.

En effet, à un instant donné, la table avec le plus grand nombre de lignes correspond au réseau d'accès par lequel transitent le plus de messages à destination du terminal multi-accès, ce qui est indicatif d'un débit descendant supérieur relativement à celui des autres réseaux d'accès, au moins pour ces messages qui sont d'un type prédéterminé, et au moins pour une période précédant l'instant donné.

Par analogie aux phéromones déposés par les fourmis pour indiquer à leur congénères des caractéristiques des différents trajets connus entre nid et nourriture, ces messages de type déterminé sont appelés par la suite des "messages phéromonaux". Par la même analogie, le décompte de lignes dans les tables peut être comparé à un décompte de phéromones déposées.

Ainsi, un terminal peut sélectionner le réseau d'accès le plus adapté à ses besoins en réception sans qu'il soit nécessaire de mesurer le débit disponible sur chacun des réseaux d'accès.

On comprend que pour que les tables reflètent de manière objective les capacités des réseaux d'accès, il est préférable que le terminal distant émette vers le terminal multi-accès les messages phéromonaux de façon régulière, en desservant équitablement chacun des réseaux d'accès.

On comprend également que le terminal distant, c'est-à-dire celui qui émet les messages phéromonaux, a également la possibilité de sélectionner le réseau d'accès le plus adapté à ses besoins en émission, sans qu'il soit nécessaire de mesurer le débit disponible sur chacun des réseaux d'accès, à condition qu'il ait accès aux décomptes de lignes des différentes tables. Ceci est particulièrement intéressant si les rôles sont inversés, c'est-à-dire si c'est le terminal multi-accès qui émet les messages phéromonaux, et c'est le terminal distant qui met à jour les compteurs.

Selon un aspect correspondant à un mode particulier de réalisation de l'invention, les messages phéromonaux effectuent un aller-retour depuis le terminal multi-accès, plutôt qu'un aller simple depuis le terminal distant. Le terminal multi-accès effectue lui-même l'émission régulière des messages phéromonaux, appelés messages initiaux pendant le trajet "aller", sur chacune de ses interfaces correspondant aux réseaux d'accès. Ainsi, la fonction du terminal distant est simplifiée puisqu'il n'a plus qu'à renvoyer chacun des messages initiaux qu'il reçoit vers le terminal multi-accès au fur et à mesure qu'il les reçoit. Dans ce mode particulier de réalisation de l'invention, le comportement des messages phéromonaux est donc proche de celui des paquets en mode TCP, où un paquet reçu par un nœud distant est toujours acquitté par l'émission par le nœud distant d'un message d'acquittement correspondant, contrairement aux paquets en mode UDP par exemple, où un paquet reçu n'est pas acquitté.

Selon un aspect de l'invention, le procédé de mise à jour comprend au moins une étape de suppression de la ligne de la table, après expiration d'une durée de vie du message phéromonal reçu.

Grâce à cet aspect, le nombre de lignes dans une table, analogue à un décompte de phéromones déposées par un des réseaux d'accès, est corrigé lorsque des messages phéromonaux sont devenus trop anciens. Ceci reflète la disponibilité des réseaux d'accès sur une durée précise qu'il est possible d'adapter à l'échelle de temps des sessions de communication qui sont établies sur ces réseaux d'accès, au lieu de refléter une disponibilité qui, autrement, serait lissée sur une période indéfinie et qui risquerait d'être trop longue pour être utile dans l'échelle de temps des sessions de communication.

Selon un aspect de l'invention, l'étape d'analyse comprend une étape de détermination d'une durée de vie restante du message phéromonal, au moment de l'étape de réception, et l'étape d'ajout d'une ligne dans la table est effectuée si la durée de vie restante n'est pas expirée.

Grâce à cet aspect, une table ne tient pas compte d'un message phéromonal s'il a déjà expiré au moment de sa réception. Ceci peut être le cas si la durée de vie restante du message phéromonal commence à décroître avant le moment de sa réception.

Selon un aspect de l'invention, la durée de vie restante du message phéromonal commence à décroître au moment de son émission par le deuxième terminal, et le message phéromonal comprend une information relative au moment de son émission.

Grâce à cet aspect, une table tient exactement compte du temps qu'un message phéromonal met à parcourir le trajet complet entre le terminal émetteur et le terminal récepteur, y compris son temps de trajet dans le réseau d'accès emprunté. L'information relative au moment de son émission est par exemple un horodatage effectué dans un champ du message par le terminal émetteur au moment de l'émission du message phéromonal.

Selon un aspect de l'invention, la durée de vie restante du message phéromonal commence à décroître au moment de l'étape de réception.

Grâce à cet aspect, le message phéromonal n'a pas besoin de comprendre une information relative au moment de son émission, ce qui raccourcit le message et simplifie les traitements côté émetteur et côté récepteur.

En effet, à condition de choisir une durée de vie restante initiale supérieure au temps de trajet quel que soit le réseau d'accès emprunté, les tables reflètent les débits des réseaux d'accès relativement les uns aux autres, sans avoir besoin de tenir compte du temps de trajet exact.

Selon un aspect de l'invention, la durée de vie restante initiale est la même pour tous les messages phéromonaux.

Grâce à cet aspect, les messages phéromonaux ont une durée de vie initiale identique quel que soit le réseau d'accès qu'ils empruntent sur leur trajet, ce qui fait qu'aucun réseau d'accès n'est favorisé par sa table au détriment d'un autre.

Selon un aspect de l'invention, le procédé de mise à jour comprend en outre une étape de décompte du nombre de lignes par table, et une étape de sélection d'un des réseaux d'accès de la pluralité en fonction du décompte.

Grâce à cet aspect, si le terminal doit augmenter son débit descendant, par exemple en ouvrant une nouvelle session de communication surtout consommatrice dans le sens dit "download", il peut utiliser les indications de débits descendants relatifs fournies par le décompte, afin de sélectionner le réseau d'accès le plus adapté à ses besoins, et afin d'éviter de surcharger des réseaux d'accès moins adaptés.

Selon un aspect de l'invention, le procédé de mise à jour comprend en outre une étape de décompte du nombre de ligne par table, et une étape d'émission d'une information relative au décompte, à destination du deuxième terminal.

Grâce à cet aspect, le terminal distant, c'est-à-dire celui qui émet les messages phéromonaux, a accès au décompte effectué par le terminal recevant et analysant les messages phéromonaux, et peut sélectionner le réseau d'accès le plus adapté à ses propres besoins en émission, dans le sens dit "upload" pour lui.

Cette étape d'émission d'une information relative au décompte peut être effectuée soit ponctuellement sur demande, soit automatiquement de façon régulière, par exemple suite à une demande d'abonnement spécifique à une telle information.

La demande ponctuelle ou d'abonnement peut venir directement du deuxième terminal, ou venir d'un élément de gestion de réseau contrôlé par un opérateur de réseau ou de service de télécommunication, tel qu'un opérateur mobile ou un fournisseur d'accès Internet, auquel est abonné l'utilisateur du deuxième terminal.

Les différents aspects du procédé de mise à jour d'une pluralité de tables qui viennent d'être décrits peuvent être mis en oeuvre indépendamment les uns des autres ou en combinaison les uns avec les autres.

Par rapport au premier terminal, les messages phéromonaux sont émis depuis un point en amont des réseaux d'accès, par le deuxième terminal. Les messages phéromonaux sont émis tour à tour via chacun des réseaux d'accès, et la fréquence d'émission des messages est identique pour toutes les interfaces.

Comme les conditions de transit peuvent différer entre ces réseaux d'accès, les messages phéromonaux ne sont pas reçus par le premier terminal au même rythme qu'ils sont émis. Ainsi, le premier terminal peut déduire des informations utiles sur les débits respectifs des réseaux d'accès, dans le sens descendant, simplement en effectuant un décompte des messages phéromonaux reçus via les différents réseaux d'accès.

Afin qu'un message phéromonal emprunte bien le réseau d'accès prévu, son adresse de destination doit être spécifique à ce réseau d'accès.

Selon un aspect de l'invention, le procédé de mise à jour comprend en outre une étape préalable d'émission d'une demande d'abonnement aux messages phéromonaux pour le premier terminal.

Grâce à cet aspect, il est possible contrôler le déclenchement de l'émission des messages phéromonaux pour un terminal donné. La demande d'abonnement peut comprendre des adresses de destination du premier terminal correspondant au différents réseaux d'accès, ou simplement un identifiant du premier terminal permettant d'obtenir ces adresses, tel qu'un numéro d'abonnement propre au premier terminal.

La demande peut venir directement du premier terminal, ou venir d'un élément de gestion de réseau contrôlé par un opérateur de réseau ou de service de

télécommunication, tel qu'un opérateur mobile ou un fournisseur d'accès Internet, auquel est abonné l'utilisateur du premier terminal.

Un exemple décrit le renvoi d'un message phéromonal vers un premier terminal, mis en œuvre par un deuxième terminal, le premier terminal et le deuxième terminal étant reliés en parallèle par au moins deux réseaux d'accès, ce exemple comprenant une étape de réception du message phéromonal en provenance du premier terminal, et une étape de renvoi du message phéromonal vers le premier terminal, le message phéromonal reçu et le message phéromonal renvoyé transitant par le même réseau d'accès.

Ainsi, il est possible de mettre en œuvre dans le premier terminal à la fois le procédé d'émission d'un message phéromonal selon l'invention, et le procédé de mise à jour d'au moins deux tables selon l'invention. Le deuxième terminal s'en trouve simplifié car il n'effectue qu'une simple opération de renvoi de messages.

Selon un aspect du procédé de renvoi, l'étape de réception est suivie, préalablement à l'étape de renvoi, d'une étape d'horodatage du message phéromonal. Ainsi, il est possible pour le premier terminal de prendre en compte la durée du trajet "retour" du message phéromonal.

L'invention concerne aussi un signal phéromonal conforme à la revendication 9.

Le signal phéromonal selon l'invention déclenche des actions précises dans le terminal qui le reçoit. Chaque message phéromonal qu'il contient est composé d'un seul paquet, par exemple un paquet ICMP, ce qui évite d'encombrer les réseaux d'accès. Les actions déclenchées par chaque message phéromonal permettent au terminal d'obtenir un décompte qui est représentatif de la bande passante relative de chacun des réseaux d'accès, dans le sens descendant.

Selon un aspect du signal phéromonal selon l'invention, le paquet comprend en outre un champ indiquant le moment de son émission par le deuxième terminal.

Grâce à cet aspect, chaque message phéromonal que contient le signal permet au premier terminal de calculer la vitesse de transmission, dans le sens descendant, du réseau d'accès emprunté par le message phéromonal reçu.

L'invention concerne aussi un premier terminal conforme à la revendication 10.

Un tel premier terminal selon l'invention peut être un terminal d'utilisateur tel qu'un "smartphone", une tablette, un ordinateur portable ou tout autre terminal apte à se connecter simultanément à des réseaux d'accès différents par des interfaces spécifiques, par exemple WiFi, 3G, 4G, etc.

Alternativement, un tel premier terminal peut être un serveur sur le réseau Internet, apte à distinguer via quel réseau d'accès ont transité les messages qu'il reçoit d'un autre terminal, par exemple à l'aide de l'identifiant utilisé par cet autre terminal.

Le premier terminal selon l'invention est apte à mettre en œuvre dans tous ses modes de réalisation le procédé de mise à jour d'une pluralité de compteurs qui vient d'être décrit.

Un exemple concerne un programme d'ordinateur comprenant des instructions pour la mise en œuvre des étapes du procédé de mise à jour qui vient d'être décrit, lorsque ce programme est exécuté par un processeur.

L'invention concerne aussi un support d'enregistrement lisible par un terminal d'utilisateur ou par un serveur sur Internet, sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

## 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :

- la figure 1 présente de façon schématique un premier terminal et un deuxième terminal mettant en œuvre le procédé de mise à jour d'au moins deux compteurs et le procédé d'émission d'un message phéromonal, selon un aspect de l'invention,
- la figure 2 présente un exemple de structure d'un message phéromonal, selon un aspect de l'invention,
- la figure 3 présente un exemple de mise en œuvre du procédé de mise à jour d'au moins deux tables et du procédé d'émission d'un message phéromonal, selon un premier mode de réalisation de l'invention,
- la figure 4 présente un exemple de mise en œuvre du procédé de mise à jour d'au moins deux tables et du procédé d'émission d'un message phéromonal, selon un deuxième mode de réalisation de l'invention,
- la figure 5 présente un exemple de structure d'un premier terminal, mettant en œuvre le procédé de mise à jour d'au moins deux tables, selon un aspect de l'invention,
- la figure 6 présente un exemple de structure d'un deuxième terminal, mettant en œuvre le procédé d'émission d'un message phéromonal, selon un aspect de l'invention.

**5. Description détaillée d'au moins un mode de réalisation de l'invention**

Dans la suite de la description, on présente des exemples de plusieurs modes de réalisation de l'invention se basant sur un terminal multi-accès apte à se connecter simultanément à un réseau WiFi et à un réseau 4G, mais l'invention s'applique également à d'autres terminaux multi-accès et à d'autres réseaux d'accès.

L'invention s'applique par exemple à une passerelle résidentielle ("home gateway", en anglais) capable d'établir une connexion à un réseau 4G, en plus de sa connexion xDSL, ou à un ordinateur personnel équipé d'une connectivité Ethernet, d'une connectivité WiFi et/ou d'une connectivité 4G.

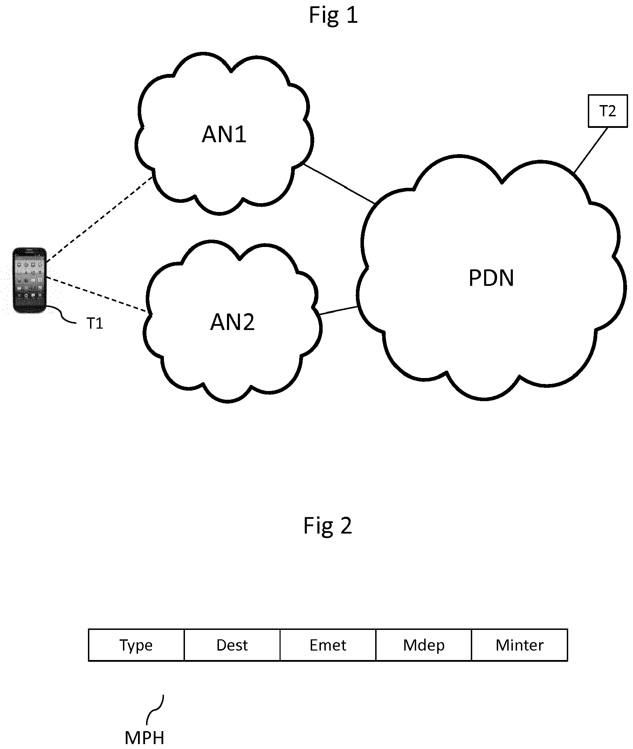

La **figure 1** présente de façon schématique un premier terminal et un deuxième terminal mettant en œuvre le procédé de mise à jour d'au moins deux compteurs et le procédé d'émission d'un message phéromonal, selon plusieurs aspects de l'invention.

Le terminal T1 est un terminal multi-accès, c'est-à-dire qu'il peut établir des sessions de communication simultanées en utilisant plusieurs technologies d'accès à la fois, par exemple en WiFi, selon les normes de la famille IEEE 802.11, et en 4G, selon les normes de la famille 3GPP LTE.

Le réseau d'accès AN1 est par exemple un réseau local comprenant des bornes compatibles WiFi. Le réseau d'accès AN2 est par exemple un réseau cellulaire comprenant des stations de base compatibles 4G.

Les réseaux d'accès AN1 et AN2 permettent tous deux au terminal T1 de se connecter à d'autres éléments distants connectés à un réseau PDN de commutation par paquets, tel que par exemple le réseau Internet.

Le terminal T2 est un élément distant connecté au réseau PDN. Les terminaux T1 et T2 peuvent échanger entre eux des messages constitués d'un ou plusieurs paquets.

Selon un **premier mode de réalisation** de l'invention, le terminal T1 évalue la bande passante disponible pour lui sur les réseaux AN1 et AN2 à l'aide de messages spéciaux, appelés messages phéromonaux, émis par le terminal T2. Le terminal T2 émet vers le terminal T1 ces messages phéromonaux en empruntant tour à tour les réseaux AN1 et AN2, et ces émissions sont répétées un grand nombre de fois selon une fréquence régulière et identique pour AN1 et AN2, pour former une suite de messages phéromonaux, appelée un signal phéromonal. Si un des deux réseaux a un débit supérieur à l'autre, les messages s'accumuleront plus vite à l'arrivée dans le terminal T1 via ce réseau d'accès. En comptant le nombre de messages reçus via chacun des réseaux d'accès AN1 et AN2 dans des tables correspondant respectivement à ces réseaux d'accès, le terminal T1 peut donc détecter lequel des deux réseaux d'accès offre le plus grand débit pour lui, ce qui est très utile s'il est sur le point d'ouvrir une nouvelle session de communication avec un élément distant connecté à Internet (non illustré). Le terminal T1 pourra sélectionner le réseau d'accès le plus adapté à ce moment-là.

Selon ce premier mode de réalisation, on comprend que les tables reflètent les débits relatifs des réseaux d'accès dans le sens descendant vers le terminal T1.

Selon une **variante du premier mode de réalisation,** les rôles sont inversés entre les terminaux T1 et T2, et c'est le terminal T1 qui émet le signal phéromonal vers le terminal T2. Le terminal T2 compte les messages dans des tables à l'arrivée. Les tables reflètent alors les débits relatifs des réseaux d'accès dans le sens descendant vers le terminal T2, c'est-à-dire le sens montant à partir du terminal T1. Pour que le terminal T1 puisse sélectionner le réseau d'accès le plus adapté pour une nouvelle session de communication utilisant de façon prépondérante le sens montant, il doit avoir accès aux tables mises à jour par le terminal T2, tout au moins au nombre de lignes par table. Le terminal T2 émet donc vers le terminal T1 un message spécial relatif à ces tables.

Selon un **deuxième mode de réalisation,** le terminal T1 émet le signal phéromonal vers le terminal T2, qui renvoie vers le terminal T1 chaque message phéromonal, après l'avoir éventuellement horodaté avant sa réémission. Chaque message phéromonal emprunte au retour le même réseau d'accès qu'il a emprunté à l'aller.

Ainsi, en comptant les messages reçus en retour, le terminal T1 dispose d'évaluations des débits relatifs à la fois dans le sens descendant et dans le sens montant. Dans ce mode de réalisation, c'est le même terminal qui effectue l'émission du signal phéromonal et le décompte des messages phéromonaux dans des tables. L'autre terminal ne fait que renvoyer les messages du signal phéromonal, en leur appliquant ou non un horodatage.

Selon une **variante du deuxième mode de réalisation,** les rôles sont inversés entre les terminaux T1 et T2, le terminal T2 qui émet le signal phéromonal, et le terminal T1 le renvoie.

Afin de limiter la croissance des tables pour chacun des réseaux d'accès, une durée de vie initiale identique D est attribuée à tous les messages phéromonaux. Le moment où la durée de vie restante commence à décroitre peut être réglé au moment de la réception du message phéromonal, ou au moment de son émission, dans n'importe lequel des modes de réalisation. Ce peut être aussi, dans le deuxième mode, après l'aller, au moment intermédiaire avant que le message soit réémis avant le retour. Lorsque la durée de vie d'un message arrive à expiration, sa ligne est soustraite de la table correspondante. Ainsi, non seulement les tables n'augmentent pas en taille indéfiniment, mais il est possible de régler la durée de vie initiale D des messages phéromonaux en fonction de la durée sur laquelle il est souhaitable de lisser les mesures de débits relatifs, par exemple pour établir une relation entre les tables et la durée moyenne d'utilisation du terminal. Le protocole TCP a des performances liées à la durée aller-retour d'un paquet IP, appelée RTT ("return trip time", en anglais), et au taux de perte de paquet sur le lien. Par exemple on observe pour un RTT de 40ms et des pertes de paquets de 0,01%, un débit max de 20 Mb/s. Dans cet exemple si les 2 accès ont cet ordre de grandeur en termes de débit et de latence, on pourra prendre :

$$D = 80ms,$$

c'est-à-dire deux fois la valeur d'un RTT moyen.

La **figure 2** présente un exemple de structure d'un message phéromonal, selon un aspect de l'invention.

Un message phéromonal MPH doit comprendre au minimum un champ Type indiquant qu'il est un message de type phéromonal, et un champ Dest indiquant l'adresse du terminal destinataire. Si le terminal destinataire ne peut pas déterminer quel réseau d'accès a été emprunté par le message, et donc laquelle des tables mettre à jour, ou lequel des réseaux d'accès doit emprunter le message phéromonal à renvoyer, alors un champ Emet indiquant l'adresse du terminal émetteur doit aussi être compris. C'est par exemple le cas du terminal T2 dans la variante du premier mode de réalisation ou dans le deuxième mode de réalisation décrits ci-dessus, car il est non-connecté directement aux réseaux d'accès, et ne peut pas identifier le réseau d'accès qui a été emprunté par un message phéromonal reçu lorsque c'est le terminal T1 qui émet le signal phéromonal. C'est par contre inutile dans la réciproque, comme dans le cas du premier mode de réalisation décrit ci-dessus, car le terminal T1 sait sur laquelle de ses interfaces de réseaux d'accès (WiFi ou 4G) il reçoit chaque message phéromonal, puisqu'il est directement connecté à ces réseaux d'accès.

Optionnellement, le message phéromonal MPH peut également comprendre un champ Mdep indiquant son moment de départ, et/ou, si le message effectue un aller-retour comme dans le deuxième mode de réalisation décrit ci-dessus, un champ Minter indiquant le moment intermédiaire entre l'aller et le retour.

Un message phéromonal peut par exemple être un type particulier de paquet ICMP (Internet Control Message Protocol, ou protocole de messages de contrôle Internet), selon la norme RFC792 (en IPv4) ou le norme RFC4443 (en IPv6). Les champs Emet et Dest décrits ci-dessus peuvent être les champs "adresse IP source" et "adresse IP destination" d'un paquet ICMP. Les autres champs décrits ci-dessus, y compris le champ Type, peuvent être compris dans le champ "données" d'un paquet ICMP.

Optionnellement, le message phéromonal MPH peut également comprendre un champ Sens, dont deux valeurs possibles permettent de distinguer le sens "aller" du sens "retour". Cela est utile lorsque qu'un terminal fonctionne à la fois dans le premier et le deuxième mode de réalisation, et si le sens est "aller", s'il doit renvoyer le message phéromonal reçu, en fonction de l'identité du terminal distant.

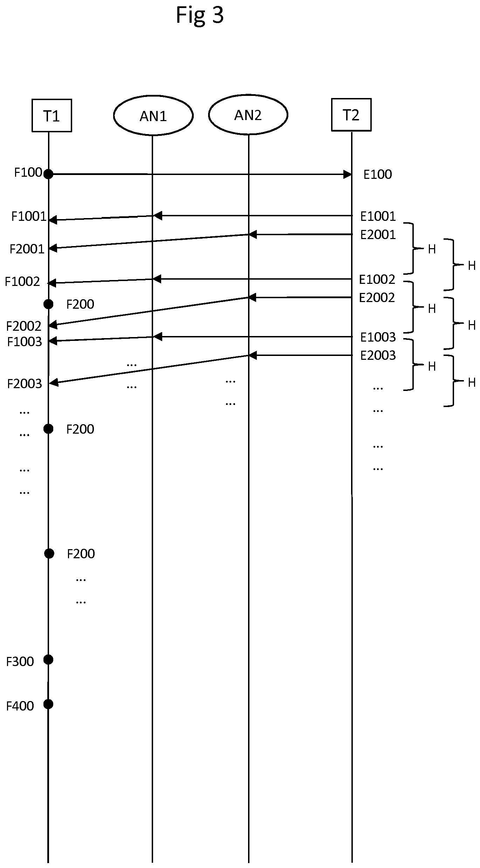

La **figure 3** présente un exemple de mise en œuvre du procédé de mise à jour d'au moins deux tables et du procédé d'émission d'un message phéromonal, selon le premier mode de réalisation de l'invention.

Lors d'une étape E100, une demande d'abonnement pour recevoir un signal phéromonal est reçue par le terminal T2.

Cette demande peut avoir été émise au cours d'une étape F100 par le terminal T1 lui-même, en transitant par l'un ou l'autre des réseaux AN1 ou AN2, ou elle peut avoir été émise par un élément de réseau quelconque, géré par un opérateur auquel est abonné l'utilisateur du terminal T1.

La demande d'abonnement comprend une adresse du terminal T1 relative au réseau AN1 et une adresse du terminal T1 relative au réseau AN2, afin que le terminal T2 émetteur du signal phéromonal soit en mesure de décider par quel réseau AN1 ou AN2 faire transiter chacun des messages phéromonaux destinés au terminal T1.

Lors d'une étape E1001, le terminal T2 émet un message phéromonal MPH1001 à destination du terminal T1 en utilisant l'adresse de T1 relative au réseau AN1. Le message MPH1001 comprend un champ Type indiquant qu'il est un message de type phéromonal, et un champ Dest comprenant la dite adresse de T1 sur AN1.

Optionnellement, il comprend également un champ Mdep comprenant une indication du moment de départ du message MPH1001.

L'étape E1001 est répétée après un intervalle de temps égal à H, lors d'une étape E1002, où un message MPH1002 identique à MPH1001, hormis, le cas échéant, le champ Mdep qui indique le moment du départ du message MPH1002 et non du message MPH1001.

Cette étape d'émission est ainsi répétée tous les intervalles H, lors des étapes E1001, E1002, E1003, etc.

De même, lors d'une étape E2001, le terminal T2 émet un message phéromonal MPH2001 à destination du terminal T1 en utilisant l'adresse de T1 relative au réseau AN2. Le message MPH2001 comprend un champ Type indiquant qu'il est un message de type phéromonal, et un champ Dest comprenant la dite adresse de T1 sur AN2. Optionnellement, il comprend également un champ Mdep comprenant une indication du moment de départ du message MPH2001.

L'étape E2001 est répétée après un intervalle de temps égal à H, lors d'une étape E2002, où un message MPH2002 identique à MPH2001, hormis, le cas échéant, le champ Mdep qui indique le moment du départ du message MPH2002 et non du message MPH2001.

Cette étape d'émission est ainsi répétée tous les intervalles H, lors des étapes E2001, E2002, E2003, etc.

Il est important de noter que l'intervalle H de répétition est de même valeur pour les étapes E1xxx, et pour les étapes E2xxx. Autrement dit, quel que soit le réseau d'accès par lequel transitent les messages phéromonaux, ils sont émis à la même fréquence.

Lors d'une étape F1001 de réception, le terminal T1 reçoit le message MPH1001 sur son interface de connexion au réseau AN1, à un moment Mrec1001.

Lors d'une étape F1001a d'analyse, le terminal T1 détecte que le message MPH1001 est un message phéromonal, grâce à son champ Type.

Lors d'une étape F1001b d'ajout, effectuée si le message reçu est un message phéromonal, le terminal T1 ajoute à une table TAN1 une ligne correspondant au message MPH1001. Cette ligne comprend au moins une cellule dont la valeur est initialisée à la valeur du moment Mrec1001.

Une durée de vie initiale D est attribuée à la ligne ainsi ajoutée, et la durée de vie restante de la ligne commence à décroitre au moment Mrec1001 de réception du message MPH1001. Une ligne de la table est analogue à une phéromone, et sa durée de vie à celle d'une phéromone, toutes les phéromones ayant la même durée de vie. Le nettoyage régulier de la table TAN1 entrainera la suppression de celles des lignes dont la durée de vie est écoulée. Si au moment Mactuel du nettoyage, Mrec1001 + D > Mactuel,
alors la ligne est supprimée, lors d'une étape F200 de suppression.

Il est important de noter que cette durée de vie initiale D est identique pour toutes les lignes de toutes les tables.

Lors d'une étape F1001c faisant suite à l'étape F1001b, le message MPH1001 est détruit.

Des étapes similaires aux étapes F1001, F1001a, F1001b et F1001c sont effectuées pour chacun des messages phéromonaux reçus par le terminal T1 sur son interface de connexion au réseau AN1, c'est-à-dire pour chacune des étapes de réception correspondantes F1002, F1003, ...

De même, des étapes F2xxx, F2xxxa, F2xxxb et F2xxxc sont effectuées pour chacun des messages phéromonaux reçus par le terminal T1 sur son interface de connexion au réseau AN2.

Dans un cas optionnel, le décompte de la durée de vie restante à une ligne est déclenché à partir du moment indiqué par le champ Mdep. Ceci a pour avantage d'éviter qu'une table se remplisse de lignes lorsque le temps de trajet au travers du réseau d'accès de cette table est anormalement long.

Dans ce cas, le terminal T1 n'effectue pas forcément l'étape F1xxxb (respectivement F2xxxb) d'ajout d'une ligne à la table TAN1 (resp. TAN2), si la différence entre Mrec1xxx (resp. Mrec2xxx) et la valeur du champ Mdep du message MPH1xxx (resp. MPH2xxx) est inférieure ou égale à D. En d'autres termes, aucune ligne correspondant à MPH1xxx (resp. MPH2xxx) n'est ajoutée à la table TAN1 (resp. TAN2) si la durée de vie initiale D est déjà expirée au moment de la réception du message MPH1xxx (resp. MPH2xxx). Par contre, si la ligne est ajoutée, le nettoyage régulier de la table TAN1 (resp. TAN2) entrainera la suppression de celles des lignes dont la durée de vie est écoulée, selon un calcul différent : si au moment Mactuel du nettoyage,

Mdep1 xxx + D > Mactuel
(resp. : Mdep2xxx + D > Mactuel),
alors la ligne est supprimée, lors de l'étape F200 de suppression.

Lors de l'étape F200 de suppression mentionnée ci-dessus, une ligne d'une table est donc supprimée si la durée écoulée depuis le moment indiqué par la valeur de la cellule est supérieur ou égal à D. Cette étape peut être mise en œuvre dans un cycle dit "de nettoyage" des tables, où chaque ligne de chaque table est examinée l'une après l'autre, et la durée de vie restante vérifiée. Le cycle de nettoyage recommence une fois terminé, immédiatement ou après une pause. De préférence, le délai entre 2 cycles de nettoyage est du même ordre de grandeur que la durée de vie D. Pour une durée de vie D de 80ms, par exemple, le délai entre 2 cycles de nettoyage peut être de 80ms.

Lors d'une étape F300 de décompte, le nombre de lignes NB1 de la table TAN1 et le nombre de lignes NB2 de la table TAN2 sont comptés. Cette étape F300 peut être déclenchée lorsque le terminal T1 est sur le point d'établir une nouvelle session de communication pouvant utiliser soit le réseau AN1, soit le réseau AN2. L'étape F300 peut aussi être effectuée périodiquement de façon anticipée.

Lors d'une étape F400 de sélection, le terminal T1 sélectionne le réseau AN1 ou le réseau AN2 en vue d'établir une nouvelle session de communication, en se basant sur NB1 et NB2. Cette sélection se base par exemple sur un calcul de ce qui est appelé par analogie un taux de phéromones de chacun des réseaux d'accès AN1 et AN2. Le taux de phéromones TPH1 du réseau AN1 est:

$$TPH1 = NB1 / (NB1 + NB2),$$

et le taux de phéromones TPH2 du réseau AN2 est:

$$TPH2 = NB2 / (NB1 + NB2).$$

La sélection d'un réseau d'accès pour une nouvelle session de communication peut ainsi être choisie de telle façon à ce que la répartition de toutes les sessions de communication du terminal T1 sur les deux réseaux d'accès se rapproche de la répartition des "phéromones".

Selon ce premier mode de réalisation, on comprend que les tables reflètent les débits relatifs des réseaux d'accès dans le sens descendant vers le terminal T1, et la sélection d'un réseau d'accès effectuée est pertinente pour ce sens. Si le sens déterminant d'une nouvelle session de communication à établir est le sens montant, on peut envisager la **variante du premier mode de réalisation,** où les rôles sont inversés entre les terminaux T1 et T2. Tout se passe de façon symétrique à ce qui vient d'être décrit, hormis les deux différences suivantes.

Premièrement, comme le terminal T2 n'a pas accès directement aux réseaux AN1 et AN2, chaque message phéromonal émis par le terminal T1 comprend aussi un champ Emet indiquant l'adresse du terminal T1 sur le réseau d'accès emprunté (AN1 ou AN2). Ceci permet au terminal T2 de distinguer les messages phéromonaux ayant transité par le réseau AN1 de ceux ayant transité par le réseau AN2.

Deuxièmement, comme c'est le terminal T1 qui doit effectuer une sélection de réseau d'accès, et que ce n'est pas lui qui effectue le décompte de "phéromones", il a besoin d'une information relative au décompte effectué par le terminal T2. Le terminal T2 lui transmet donc le décompte des lignes NB1 et NB2 dans un message spécifique.

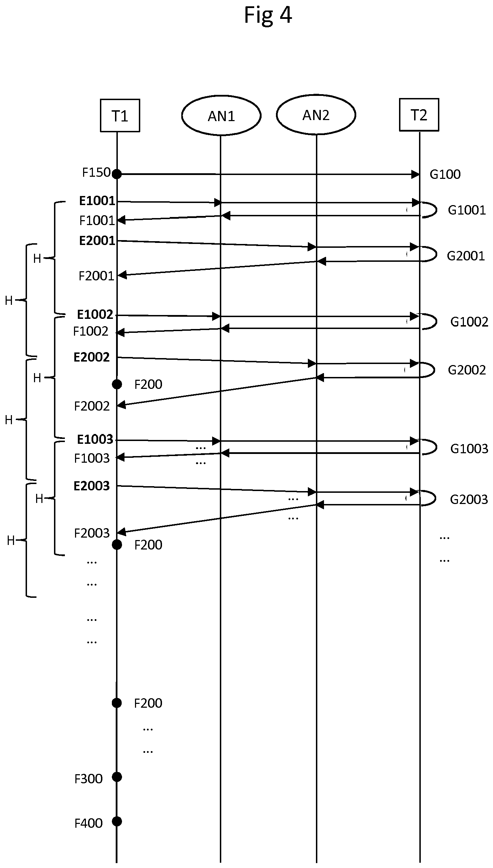

La **figure 4** présente un exemple de mise en œuvre du procédé de mise à jour d'au moins deux tables et du procédé d'émission d'un message phéromonal, selon le deuxième mode de réalisation de l'invention.

Il est rappelé que dans ce mode, chaque message phéromonal effectue un aller-retour en empruntant au retour le même réseau d'accès qu'il a emprunté à l'aller.

Lors d'une étape G100, une demande d'abonnement pour recevoir un signal phéromonal est reçue par le terminal T2.

Cette demande peut avoir été émise au cours d'une étape F150 par le terminal T1 lui-même, en transitant par l'un ou l'autre des réseaux AN1 ou AN2, ou elle peut avoir été émise par un élément de réseau quelconque, géré par un opérateur auquel est abonné l'utilisateur du terminal T1. Cette demande d'abonnement diffère de celle décrite en référence à l'étape E100 de la figure 3 en ce qu'elle instruit le terminal T2 de renvoyer les messages phéromonaux qu'il reçoit vers les adresses qui les ont émises.

Les étapes E1xxx et les étapes E2xxx sont identiques à celles décrites en référence à la figure 3, sauf qu'elles sont effectuées par le terminal T1, et non le terminal T2. Il est important de rappeler que l'intervalle H de répétition de l'émission des messages phéromonaux est de même valeur pour les étapes E1xxx, et pour les étapes E2xxx. Autrement dit, quel que soit le réseau d'accès par lequel transitent les messages phéromonaux, ils sont émis à la même fréquence.

Lors des étapes G1xxx (et G2xxx), le terminal T2 reçoit les messages phéromonaux MPH1xxx (et MPH2xxx) émis par le terminal T1, et les renvoie modifiés au terminal T1. La modification d'un message phéromonal consiste au minimum à intervertir les valeurs des champs Emet et Dest. Ainsi, chaque message phéromonal revient au terminal T1, en empruntant au retour le même réseau d'accès, AN1 ou AN2, qu'il a emprunté à l'aller.

Optionnellement, la modification effectuée par le terminal T2 comprend également soit la mise à jour du champ Mdep avec l'horodatage du moment du renvoi du message phéromonal par le terminal T2, soit l'utilisation d'un autre champ, le champ Minter, pour renseigner la valeur de cet horodatage.

Les étapes de réception d'un message phéromonal par le terminal T1, c'est-à-dire les étapes F1xxx et F2xxx, sont identiques à celles décrites en référence à la figure 3.

Les étapes d'analyse du message phéromonal par le terminal T1, c'est-à-dire les étapes F1xxxa, et F2xxxa, sont identiques à celles décrites en référence à la figure 3.

Les étapes d'ajout d'une ligne dans la table TAN1 ou TAN2 par le terminal T1, c'est-à-dire les étapes F1xxxb, et F2xxxb, sont identiques à celles décrites en référence à la figure 3.

Les étapes de destruction du message phéromonal par le terminal T1, c'est-à-dire les étapes F1xxxc, et F2xxxc, sont identiques à celles décrites en référence à la figure 3.

Les étapes F200 de suppression, F300 de décompte et F400 de sélection, sont identiques à celles décrites en référence à la figure 3.

Selon ce deuxième mode de réalisation, on comprend que les tables TAN1 et TAN1 reflètent les débits relatifs des réseaux d'accès, dans les deux sens de transmission à la fois, descendant et montant vers le terminal T1.

Selon une variante de ce deuxième mode de réalisation, il est également possible de distinguer les deux sens de transmission, en tirant avantage des horodatages renseignés dans les messages phéromonaux avec les champs Mdep et Minter. En effet, lors de l'étape d'ajout d'une ligne dans une table, il est possible de corriger la durée de vie restante du "phéromone" correspondant à un message phéromonal MPHyxxx, en y retranchant soit la durée du trajet "aller", soit celle du trajet "retour". La durée du trajet "aller" est la différence entre la valeur Minteryxxx du champ Minter et la valeur Mdepyxxx du champ Mdep. La durée du trajet "retour" est la différence entre le moment Mrecyxxx de la réception du message MPHyxxx, et la valeur Minteryxxx du champ Minter. Il donc possible d'utiliser deux tables distinctes pour chacun des réseaux d'accès, une première table pour le sens descendant où c'est la durée du trajet "aller" qui est retranchée, et une deuxième table pour le sens montant où c'est la durée du trajet "retour" qui est retranchée.

Lorsque c'est la durée du trajet "aller" qui doit être retranchée, le nettoyage régulier d'une table entrainera la suppression de celles des lignes dont la durée de vie est écoulée, lors de l'étape F200 de suppression, si au moment Mactuel du nettoyage,

Mrecyxxx + D - (Minteryyy - Mdepyxxx) > Mactuel

Lorsque c'est la durée du trajet "retour" qui doit être retranchée, le nettoyage régulier d'une table entrainera la suppression de celles des lignes dont la durée de vie est écoulée, lors de l'étape F200 de suppression, si au moment Mactuel du nettoyage,

Mrecyxxx + D - (Mrecyxxx - Minteryyy) > Mactuel, c'est-à-dire,

D + Minteryyy > Mactuel

D'autres méthodes de calcul sont possibles, par exemple en faisant démarrer la vie d'un message phéromonal au moment de son départ, ou de son demi-tour, plutôt qu'au moment de son retour.

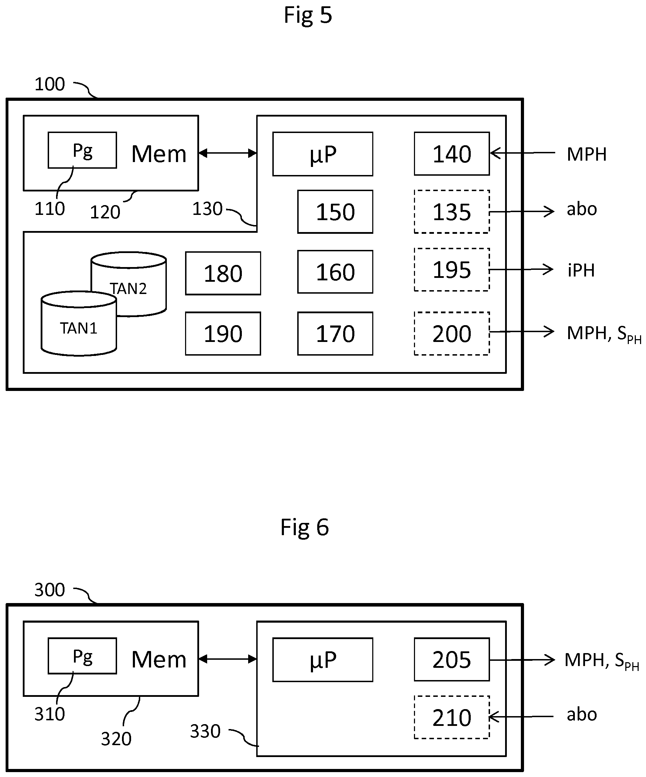

En relation avec la **figure 5,** on présente maintenant un exemple de structure d'un premier terminal, mettant en œuvre le procédé de mise à jour d'au moins deux tables, selon un aspect de l'invention.

Le premier terminal 100 met en œuvre le procédé de mise à jour d'au moins deux tables, dont différents modes de réalisation viennent d'être décrits. Un tel terminal 100 peut être un smartphone, une tablette, un ordinateur portable ou tout autre terminal apte à se connecter simultanément à des réseaux d'accès différents par des interfaces spécifiques, par exemple WiFi, 3G, 4G, etc.

Par exemple, le terminal 100 comprend une unité de traitement 130, équipée par exemple d'un microprocesseur μP, et pilotée par un programme d'ordinateur 110, stocké dans une mémoire 120 et mettant en œuvre le procédé de mise à jour d'au moins deux tables selon l'invention, et éventuellement le procédé d'émission d'un message phéromonal selon l'invention. A l'initialisation, les instructions de code du programme d'ordinateur 110 sont par exemple chargées dans une mémoire RAM, avant d'être exécutées par le processeur de l'unité de traitement 130.

Un tel terminal 100 comprend :

- au moins deux tables TAN1 et TAN2, correspondant respectivement à au moins deux réseaux d'accès AN1 et AN2,
- un module de réception 140, apte à recevoir un message phéromonal (MPH), en provenance d'un deuxième terminal,
- un module d'analyse 150, apte à analyser le message phéromonal reçu, l'analyse comprenant une détection du type du message, une détection du réseau d'accès emprunté par le message,
- un module d'ajout 160, apte à ajouter, en fonction de l'analyse, une ligne correspondant au message phéromonal dans la table correspondant au réseau d'accès emprunté,
- un module de suppression 170, apte à supprimer une ligne d'une table, après expiration d'une durée de vie,
- un module de décompte 180, apte à compter le nombre de lignes par table,
- un module de sélection 190, apte à sélectionner, en fonction du décompte, un des réseaux d'accès, au travers duquel une nouvelle session de communication doit être établie.

Avantageusement, le terminal 100 peut aussi comprendre :

- un module d'émission 195, apte à émettre une information (iPH) relative au décompte, à destination d'un deuxième terminal apte à sélectionner, en fonction du décompte, un des réseaux d'accès, au travers duquel une nouvelle session de communication doit être établie,
- un module d'émission 135, apte à émettre une demande d'abonnement (abo) à un signal phéromonal portant des messages phéromonaux, à destination d'un deuxième terminal.

Avantageusement, le terminal 100 peut aussi comprendre :

- un module d'émission 200, apte à émettre vers un deuxième terminal un message phéromonal (MPH), le message étant partie d'un signal phéromonal ($S_{PH}$) constitué d'une suite de messages phéromonaux émis de façon répétée à intervalles identiques en empruntant chacun des réseaux d'accès.

En relation avec la **figure 6,** on présente maintenant un exemple de structure d'un deuxième terminal, mettant en œuvre le procédé d'émission d'un message phéromonal, selon un aspect de l'invention.

Le deuxième terminal 300 met en œuvre le procédé d'émission d'un message phéromonal, dont différents modes de réalisation viennent d'être décrits. Un tel terminal 300 peut être n'importe quel élément situé en amont des réseaux d'accès, par rapport au premier terminal qui reçoit les messages phéromonaux. Le terminal 300 peut être par exemple un serveur sur le réseau Internet.

Par exemple, le deuxième terminal 300 comprend une unité de traitement 330, équipée par exemple d'un microprocesseur $\mu$P, et pilotée par un programme d'ordinateur 310, stocké dans une mémoire 320 et mettant en œuvre le procédé de mise à jour d'au moins deux tables selon l'invention, et éventuellement le procédé d'émission d'un message phéromonal selon l'invention. A l'initialisation, les instructions de code du programme d'ordinateur 310 sont par exemple chargées dans une mémoire RAM, avant d'être exécutées par le processeur de l'unité de traitement 330.

Un tel deuxième terminal 300 comprend :

- un module d'émission 205, apte à émettre vers un premier terminal un message phéromonal (MPH), le message étant partie d'un signal phéromonal ($S_{PH}$) constitué d'une suite de messages phéromonaux émis de façon répétée à intervalles identiques en empruntant chacun des réseaux d'accès. Avantageusement, le deuxième terminal 300 peut aussi comprendre :
- un module de réception 210, apte à recevoir en provenance d'un premier terminal une demande d'abonnement (abo) à un signal phéromonal portant des messages phéromonaux.

Les modules décrits en relation avec les figures 5 et 6 peuvent être des modules matériels ou logiciels.

Les exemples de réalisation de l'invention qui viennent d'être présentés ne sont que quelques uns des modes de réalisation envisageables. Ils montrent que l'invention permet à un terminal multi-accès de sélectionner le réseau d'accès le plus adapté à ses besoins en réception ou en émission, sans qu'il soit nécessaire de mesurer les débits disponibles sur chacun des réseaux d'accès, dans un sens ou dans un autre.

## Revendications

1. **Procédé de mise à jour** d'une pluralité de tables (TAN1, TAN2) correspondant respectivement à une pluralité de réseaux d'accès (AN1, AN2) reliant en parallèle un premier terminal (T1) à un deuxième terminal (T2), le procédé comprenant les étapes suivantes mises en œuvre par le premier terminal:

   • réception (F1001, F2001) d'un message (MPH), dit message phéromonal, reçu en provenance du deuxième terminal et ayant transité par un des réseaux d'accès de la pluralité,
   • analyse (F1001a, F2001a) du contenu du message phéromonal reçu, comprenant une étape de détection du message phéromonal,
   • ajout (F1001b, F2001b) d'une ligne correspondant au message phéromonal dans la table correspondant au réseau d'accès de transit du message phéromonal reçu, en fonction de l'analyse,

   le procédé comprenant en outre une étape (F300) de décompte du nombre de lignes par table, et une étape (F400) de sélection d'un des réseaux d'accès de la pluralité en fonction du décompte,
   le message phéromonal reçu ayant été :

   • soit émis par le deuxième terminal à destination du premier terminal de façon répétée selon une fréquence identique au travers de chacun des réseaux d'accès de la pluralité,
   • soit émis par le deuxième terminal à destination du premier terminal en réponse à un message phéromonal correspondant, dit message phéromonal initial, émis par le premier terminal à destination du deuxième terminal de façon répétée selon une fréquence identique au travers de chacun des réseaux d'accès de la pluralité, le message phéromonal reçu et ledit message phéromonal initial ayant transité par le même réseau d'accès.

2. **Procédé de mise à jour** selon la revendication précédente, comprenant au moins une étape (F200) de suppression de la ligne de la table, après expiration d'une durée de vie du message phéromonal reçu.

3. **Procédé de mise à jour** selon l'une des revendications précédentes, où la durée de vie restante du message phéromonal commence à décroitre au moment (Mdep) de son émission (E1001, E2001) par le deuxième terminal, et où le message phéromonal comprend une information relative au moment de son émission.

4. **Procédé de mise à jour** selon l'une des revendications 1 à 2, où la durée de vie restante du message phéromonal commence à décroitre au moment (Mrec) de l'étape de réception (F1001, F2001).

5. **Procédé de mise à jour** selon l'une des revendications précédentes, où la durée de vie restante initiale est la même pour tous les messages phéromonaux.

6. **Procédé de mise à jour** selon l'une des revendications précédentes, comprenant en outre une étape (F500) d'émission d'une information relative au décompte, à destination du deuxième terminal.

**7. Procédé de mise à jour** selon l'une des revendications précédentes, comprenant une étape préalable (F100, F150) d'émission vers le deuxième terminal d'une demande d'abonnement aux messages phéromonaux.

**8. Signal phéromonal** ($S_{PH}$) portant une suite de messages phéromonaux (MPH) émis à destination d'un premier terminal (T1) en provenance d'un deuxième terminal (T2) au travers de chacun des réseaux d'accès d'une pluralité de réseaux d'accès (AN1, AN2), le premier terminal et le deuxième terminal étant reliés en parallèle par la pluralité de réseaux d'accès, le premier terminal comprenant une pluralité de tables correspondant respectivement à la pluralité de réseaux d'accès, où un message phéromonal de la suite :

• comprend un seul paquet, le paquet comprenant une adresse (Dest) du premier terminal relative à un réseau d'accès de la pluralité, par lequel le message transite,
• et déclenche, lorsqu'il est reçu par le premier terminal, l'ajout par le premier terminal d'une ligne dans la table (TAN1, TAN2) correspondant audit réseau d'accès, le nombre de lignes par table étant déterminant pour la sélection d'un réseau d'accès de la pluralité, par le premier terminal,

le message phéromonal reçu ayant été :

• soit émis par le deuxième terminal à destination du premier terminal de façon répétée selon une fréquence identique au travers de chacun des réseaux d'accès de la pluralité,
• soit émis par le deuxième terminal à destination du premier terminal en réponse à un message phéromonal correspondant, dit message phéromonal initial, émis par le premier terminal à destination du deuxième terminal de façon répétée selon une fréquence identique au travers de chacun des réseaux d'accès de la pluralité, le message phéromonal reçu et ledit message phéromonal initial ayant transité par le même réseau d'accès.

**9. Premier terminal** (T1) connecté à une pluralité de réseaux d'accès (AN1, AN2) le reliant en parallèle à un deuxième terminal (T2), le dit premier terminal comprenant :

• une pluralité de tables (TAN1, TAN2) correspondant à la pluralité de réseaux d'accès,
• un module (140) de réception d'un message (MPH), dit message phéromonal, reçu en provenance du deuxième terminal et ayant transité par un des réseaux d'accès de la pluralité,

• un module (150) d'analyse du contenu du message phéromonal reçu,
• un module (160) d'ajout d'une ligne à la table correspondant au réseau d'accès de transit du message phéromonal reçu, en fonction de l'analyse,
• un module (180) de décompte du nombre de lignes par table,
• un module (190) de sélection d'un des au moins deux réseaux d'accès en fonction du décompte,

le message phéromonal reçu ayant été :

• soit émis par le deuxième terminal à destination du premier terminal de façon répétée selon une fréquence identique au travers de chacun des réseaux d'accès de la pluralité,
• soit émis par le deuxième terminal à destination du premier terminal en réponse à un message phéromonal correspondant, dit message phéromonal initial, émis par le premier terminal à destination du deuxième terminal de façon répétée selon une fréquence identique au travers de chacun des réseaux d'accès de la pluralité, le message phéromonal reçu et ledit message phéromonal initial ayant transité par le même réseau d'accès.

**10. Support d'enregistrement** lisible par un terminal d'utilisateur correspondant au premier terminal de la revendication 1, sur lequel est enregistré un programme d'ordinateur comprenant des instructions pour la mise en œuvre des étapes du procédé de mise à jour d'au moins deux tables selon la revendication 1, lorsque ce programme est exécuté par un processeur dudit terminal utilisateur.

**Patentansprüche**

**1. Verfahren** zur Aktualisierung einer Vielzahl von Tabellen (TAN1, TAN2), die je einer Vielzahl von Zugangsnetzen (AN1, AN2) entsprechen, die ein erstes Endgerät (T1) parallel mit einem zweiten Endgerät (T2) verbinden, wobei das Verfahren die folgenden vom ersten Endgerät durchgeführten Schritte enthält:

• Empfang (F1001, F2001) einer Nachricht (MPH), pheromonale Nachricht genannt, die vom zweiten Endgerät kommend empfangen wird und eines der Zugangsnetze der Vielzahl durchquert hat,
• Analyse (F1001a, F2001a) des Inhalts der empfangenen pheromonalen Nachricht, die einen Schritt der Erfassung der pheromonalen Nachricht enthält,

• Hinzufügung (F1001b, F2001b) einer Zeile entsprechend der pheromonalen Nachricht in die Tabelle entsprechend dem Durchquerungs-Zugangsnetz der empfangenen pheromonalen Nachricht, abhängig von der Analyse,

wobei das Verfahren außerdem einen Schritt (F300) des Zählens der Anzahl von Zeilen pro Tabelle und einen Schritt (F400) der Auswahl eines der Zugangsnetze der Vielzahl abhängig von der Zählung enthält, wobei die empfangene pheromonale Nachricht:

• entweder vom zweiten Endgerät an das erste Endgerät wiederholt gemäß einer gleichen Frequenz über jedes der Zugangsnetze der Vielzahl gesendet wurde,
• oder vom zweiten Endgerät an das erste Endgerät als Antwort auf eine entsprechende pheromonale Nachricht, ursprüngliche pheromonale Nachricht genannt, gesendet wurde, die vom ersten Endgerät an das zweite Endgerät wiederholt gemäß einer gleichen Frequenz über jedes der Zugangsnetze der Vielzahl gesendet wird, wobei die empfangene pheromonale Nachricht und die ursprüngliche pheromonale Nachricht das gleiche Zugangsnetz durchquert haben.

2. Aktualisierungsverfahren nach dem vorhergehenden Anspruch, das mindestens einen Schritt (F200) des Löschens der Zeile aus der Tabelle nach dem Ablauf einer Lebensdauer der empfangenen pheromonalen Nachricht enthält.

3. Aktualisierungsverfahren nach einem der vorhergehenden Ansprüche, wobei die verbleibende Lebensdauer der pheromonalen Nachricht im Moment (Mdep) ihres Sendens (E1001, E2001) vom zweiten Endgerät abzunehmen beginnt, und wobei die pheromonale Nachricht eine Information bezüglich ihres Sendemoments enthält.

4. Aktualisierungsverfahren nach einem der Ansprüche 1 bis 2, wobei die verbleibende Lebensdauer der pheromonalen Nachricht im Moment (Mrec) des Empfangsschritts (F1001, F2001) abzunehmen beginnt.

5. Aktualisierungsverfahren nach einem der vorhergehenden Ansprüche, wobei die ursprüngliche verbleibende Lebensdauer für alle pheromonalen Nachrichten gleich ist.

6. Aktualisierungsverfahren nach einem der vorhergehenden Ansprüche, das außerdem einen Schritt (F500) des Sendens einer Information betreffend die Zählung an das zweite Endgerät enthält.

7. Aktualisierungsverfahren nach einem der vorhergehenden Ansprüche, das einen vorhergehenden Schritt (F100, F150) des Sendens eines Abonnementantrags der pheromonalen Nachrichten an das zweite Endgerät enthält.

8. Pheromonales Signal ($S_{PH}$), das eine Folge von pheromonalen Nachrichten (MPH) trägt, das an ein erstes Endgerät (T1) von einem zweiten Endgerät (T2) kommend über jedes der Zugangsnetze einer Vielzahl von Zugangsnetzen (AN1, AN2) gesendet wird, wobei das erste Endgerät und das zweite Endgerät durch die Vielzahl von Zugangsnetzen parallel verbunden sind, wobei das erste Endgerät eine Vielzahl von Tabellen enthält, die je der Vielzahl von Zugangsnetzen entsprechen, wobei eine pheromonale Nachricht der Folge:

• ein einziges Paket enthält, wobei das Paket eine Adresse (Dest) des ersten Endgeräts bezüglich eines Zugangsnetzes der Vielzahl enthält, das die Nachricht durchquert,
• und, wenn sie vom ersten Endgerät empfangen wird, die Hinzufügung durch das erste Endgerät einer Zeile in die Tabelle (TAN1, TAN2) entsprechend dem Zugangsnetz auslöst, wobei die Anzahl von Zeilen pro Tabelle für die Auswahl eines Zugangsnetzes der Vielzahl durch das erste Endgerät bestimmend ist,

wobei die empfangene pheromonale Nachricht:

• entweder vom zweiten Endgerät an das erste Endgerät wiederholt gemäß einer gleichen Frequenz über jedes der Zugangsnetze der Vielzahl gesendet wurde,
• oder vom zweiten Endgerät an das erste Endgerät als Antwort auf eine entsprechende pheromonale Nachricht, ursprüngliche pheromonale Nachricht genannt, gesendet wurde, die vom ersten Endgerät an das zweite Endgerät wiederholt gemäß einer gleichen Frequenz über jedes der Zugangsnetze der Vielzahl gesendet wird, wobei die empfangene pheromonale Nachricht und die ursprüngliche pheromonale Nachricht das gleiche Zugangsnetz durchquert haben.

9. Erstes Endgerät (T1), das an eine Vielzahl von Zugangsnetzen (AN1, AN2) angeschlossen ist, die es parallel mit einem zweiten Endgerät (T2) verbinden, wobei das erste Endgerät enthält:

• eine Vielzahl von Tabellen (TAN1, TAN2), die der Vielzahl von Zugangsnetzen entsprechen,
• ein Modul (140) zum Empfang einer Nachricht (MPH), pheromonale Nachricht genannt, die vom zweiten Endgerät kommend empfangen wird und eines der Zugangsnetze der Vielzahl durchquert hat,

• ein Modul (150) zur Analyse des Inhalts der empfangenen pheromonalen Nachricht,
• ein Modul (160) zum Hinzufügen einer Zeile zur Tabelle entsprechend dem Durchquerungs-Zugangsnetz der empfangenen pheromonalen Nachricht, abhängig von der Analyse,
• ein Modul (180) zum Zählen der Anzahl von Zeilen pro Tabelle,
• ein Modul (190) zur Auswahl eines der mindestens zwei Zugangsnetze abhängig von der Zählung,

wobei die empfangene pheromonale Nachricht:

• entweder vom zweiten Endgerät an das erste Endgerät wiederholt gemäß einer gleichen Frequenz über jedes der Zugangsnetze der Vielzahl gesendet wurde,
• oder vom zweiten Endgerät an das erste Endgerät als Antwort auf eine entsprechende pheromonale Nachricht, ursprüngliche pheromonale Nachricht genannt, gesendet wurde, die vom ersten Endgerät an das zweite Endgerät wiederholt gemäß einer gleichen Frequenz über jedes der Zugangsnetze der Vielzahl gesendet wird, wobei die empfangene pheromonale Nachricht und die ursprüngliche pheromonale Nachricht das gleiche Zugangsnetz durchquert haben.

10. Aufzeichnungsträger, der von einem Benutzerendgerät entsprechend dem ersten Endgerät des Anspruchs 1 lesbar ist, auf dem ein Computerprogramm gespeichert ist, das Anweisungen zur Durchführung der Schritte des Aktualisierungsverfahrens von mindestens zwei Tabellen nach Anspruch 1 enthält, wenn dieses Programm von einem Prozessor des Benutzerendgeräts ausgeführt wird.

**Claims**

1. Method for updating a plurality of tables (TAN1, TAN2) corresponding respectively to a plurality of access networks (AN1, AN2) linking a first terminal (T1) to a second terminal (T2) in parallel, the method comprising the following steps implemented by the first terminal:

   - reception (F1001, F2001) of a message (MPH), known as a pheromonal message, that is received from the second terminal and has travelled through one of the access networks of the plurality,
   - analysis (F1001a, F2001a) of the contents of the pheromonal message received, comprising a step of detecting the pheromonal message,
   - addition (F1001b, F2001b) of a row corresponding to the pheromonal message to the table corresponding to the access network of travel of the pheromonal message received, depending on the analysis,

the method also comprising a step (F300) of counting the number of rows per table, and a step (F400) of selecting one of the access networks of the plurality depending on the count,
the pheromonal message received having been:

   - either sent by the second terminal towards the first terminal repeatedly at an identical frequency through each of the access networks of the plurality,
   - or sent by the second terminal towards the first terminal in response to a corresponding pheromonal message, known as an initial pheromonal message, sent by the first terminal towards the second terminal repeatedly at an identical frequency through each of the access networks of the plurality, the pheromonal message received and said initial pheromonal message having travelled through the same access network.

2. Updating method according to the preceding claim, comprising at least one step (F200) of deleting the row from the table following expiry of a lifetime of the pheromonal message received.

3. Updating method according to either of the preceding claims, wherein the remaining lifetime of the pheromonal message starts to decrease at the moment (Mdep) it is send (E1001, E2001) by the second terminal, and wherein the pheromonal message comprises an item of information relating to the moment of its sending.

4. Updating method according to either of Claim 1 and 2, wherein the remaining lifetime of the pheromonal message starts to decrease at the moment (Mrec) of the receiving step (F1001, F2001).

5. Updating method according to one of the preceding claims, wherein the initial remaining lifetime is the same for all the pheromonal messages.

6. Updating method according to one of the preceding claims, also comprising a step (F500) of sending an item of information relating to the count towards the second terminal.

7. Updating method according to one of the preceding claims, comprising a prior step (F100, F150) of sending to the second terminal a request for subscription to the pheromonal messages.

8. Pheromonal signal ($S_{PH}$) bearing a string of pheromonal messages (MPH) sent towards a first terminal (T1) from a second terminal (T2) through each of the access networks of a plurality of access networks (AN1, AN2), the first terminal and the second terminal being linked in parallel by the plurality of access networks, the first terminal comprising a plurality of tables corresponding respectively to the plurality of access networks, wherein a pheromonal message of the string:

   - comprises a single packet, the packet comprising an address (Dest) of the first terminal relating to an access network of the plurality, through which the message travels,
   - and, when it is received by the first terminal, triggers the addition by the first terminal of a row to the table (TAN1, TAN2) corresponding to said access network, the number of rows per table being determining for the selection of an access network of the plurality by the first terminal,

   the pheromonal message received having been:

   - either sent by the second terminal towards the first terminal repeatedly at an identical frequency through each of the access networks of the plurality,
   - or sent by the second terminal towards the first terminal in response to a corresponding pheromonal message, known as an initial pheromonal message, sent by the first terminal towards the second terminal repeatedly at an identical frequency through each of the access networks of the plurality, the pheromonal message received and said initial pheromonal message having travelled through the same access network.

9. First terminal (T1) connected to a plurality of access networks (AN1, AN2) linking it in parallel to a second terminal (T2), said first terminal comprising:

   - a plurality of tables (TAN1, TAN2) corresponding to the plurality of access networks,
   - a module (140) for receiving a message (MPH), known as a pheromonal message, that is received from the second terminal and has travelled through one of the access networks of the plurality,
   - a module (150) for analysing the contents of the pheromonal message received,
   - a module (160) for adding a row to the table corresponding to the access network of travel of the pheromonal message received, depending on the analysis,

   - a module (180) for counting the number of lines per table,
   - a module (190) for selecting one of the at least two access networks depending on the count,

   the pheromonal message received having been:

   - either sent by the second terminal towards the first terminal repeatedly at an identical frequency through each of the access networks of the plurality,
   - or sent by the second terminal towards the first terminal in response to a corresponding pheromonal message, known as an initial pheromonal message, sent by the first terminal towards the second terminal repeatedly at an identical frequency through each of the access networks of the plurality, the pheromonal message received and said initial pheromonal message having travelled through the same access network.

10. Recording medium that is readable by a user terminal corresponding to the first terminal of Claim 1, on which a computer program is recorded that comprises instructions for implementing the steps of the method for updating at least two tables according to Claim 1 when the program is executed by a processor of said user terminal.

## Fig 1

## Fig 2

| Type | Dest | Emet | Mdep | Minter |
|------|------|------|------|--------|

MPH

# Fig 3

# Fig 4

## Fig 5

## Fig 6

## RÉFÉRENCES CITÉES DANS LA DESCRIPTION

**Documents brevets cités dans la description**

- EP 2663129 A1
- US 20140056153 A1